# EUROPEAN PATENT SPECIFICATION

(11) **EP 3 476 464 B1**
(45) Date of publication and mention of the grant of the patent: **07.05.2025**
(21) Application number: 18203089.0
(22) Date of filing: 29.10.2018
(51) Int. Cl.: B01D 61/02, B01D 67/00, B01D 71/60, B01D 71/64, B01D 71/80, B01D 71/82

(54) **SURFACE TREATMENT METHOD, USE OF LIQUIDS IN SURFACE TREATMENT, AND SURFACE-TREATED ARTICLE**
OBERFLÄCHENBEHANDLUNGSVERFAHREN, VERWENDUNG VON FLÜSSIGKEITEN IN DER OBERFLÄCHENBEHANDLUNG UND OBERFLÄCHENBEHANDELTER ARTIKEL
PROCÉDÉ DE TRAITEMENT DE SURFACE, UTILISATION DE LIQUIDES DANS LE TRAITEMENT DE SURFACE ET ARTICLE À SURFACE TRAITÉE

(30) Priority: 31.10.2017 JP 2017211381; 02.03.2018 JP 2018037951
(43) Date of publication of application: 01.05.2019
(73) Proprietor: Tokyo Ohka Kogyo Co., Ltd., Kawasaki-shi, Kanagawa 211-0012 (JP)
(72) Inventor: SENZAKI, Takahiro, KANAGAWA 211-0012 (JP); KAMIZONO, Takashi, KANAGAWA 211-0012 (JP); NOGUCHI, Takuya, KANAGAWA 211-0012 (JP)
(74) Representative: Plasseraud IP

(56) References cited:
- EP-A1- 3 147 334
- ZHIWEI THONG ET AL: "Novel Nanofiltration Membranes Consisting of a Sulfonated Pentablock Copolymer Rejection Layer for Heavy Metal Removal", ENVIRONMENTAL SCIENCE & TECHNOLOGY, vol. 48, no. 23, 18 November 2014 (2014-11-18), US, pages 13880 - 13887, XP055488687, ISSN: 0013-936X, DOI: 10.1021/es5031239
- JIE GAO ET AL: "Chelating polymer modified P84 nanofiltration (NF) hollow fiber membranes for high efficient heavy metal removal", WATER RESEARCH, vol. 63, 1 October 2014 (2014-10-01), AMSTERDAM, NL, pages 252 - 261, XP055571460, ISSN: 0043-1354, DOI: 10.1016/j.watres.2014.06.006
- CHAOYI BA ET AL: "Preparation and characterization of a neutrally charged antifouling nanofiltration membrane by coating a layer of sulfonated poly(ether ether ketone) on a positively charged nanofiltration membrane", JOURNAL OF MEMBRANE SCIENCE, vol. 362, no. 1-2, 1 October 2010 (2010-10-01), NL, pages 192 - 201, XP055571466, ISSN: 0376-7388, DOI: 10.1016/j.memsci.2010.06.032

## Description

### BACKGROUND OF THE INVENTION

### Field of the Invention

The present invention relates to a surface treatment method, the use of liquids in a surface treatment,and a surface-treated article.

### Related Art

Conventionally, various surface-treated articles have been used depending on a variety of applications. In such surface treatment, needs for treatment to make a surface hydrophilic or hydrophobic are very large. Furthermore, various molded products, films, porous membranes, fibers, and the like, including polyimide resin or polyimide resin compositions are used because they have excellent heat resistance, chemical resistance, mechanical properties, and the like.

For making polyimide resin hydrophilic, for example, a method for producing hydrophilic polyimide resin by heating polyamide acid in an ozone atmosphere to ring-close the polyamide acid has been proposed (see Patent Document 1).

Patent Document 1: Japanese Unexamined Patent Application, Publication No. 2005-213310

Other methods to modify the surface properties of polyimide comprising surfaces are known from Thong et al., Environ. Sci. Technol. , vol. 48, no. 23, pages 13880-13887, Gao et al., Water Reg., vol. 63, pages 252-261, Ba et al., J. Membr. Sci., vol. 362, no. 1-2, pages 192-201 and EP3147334.

### SUMMARY OF THE INVENTION

However, the method described in Patent Document 1 has a problem that since polyamic acid as a flammable material is heated to such a high temperature as 200°C or more in an ozone atmosphere, a fire or explosion may occur in case of failure in ozone concentration control or temperature control. Furthermore, the method described in Patent Document 1 has another problem that ozone is highly toxic to human body.

The present invention has been made considering the above-mentioned problems, and has an object to provide a surface treatment method capable of successfully making a treatment target including polyimide on a surface thereof hydrophilic or hydrophobic with a safe operation, a two-liquid type surface treatment liquid that can be suitably used for the surface treatment method, and a surface-treated polyimide product that can be obtained by the above-described surface treatment method.

The inventors of the present invention have found that the above-mentioned problems can be solved by bonding first resin having a primary amino group and/or a hydroxyl group, and a secondary amino group, to a surface of a treatment target including polyimide on the surface thereof, and then bonding second resin having a (meth)acryloyl group and/or a carbamoyl group, a hydrophilic group and/or a hydrophobic group, to the first resin, thereby arriving at completion of the present invention. More specifically, the present invention provides the followings.

A first aspect of the present invention is a surface treatment method for making a treatment target including polyimide on a surface thereof hydrophilic or hydrophobic, the method including:
covalently bonding first resin to the surface including polyimide of the treatment target; and
covalently bonding second resin to the first resin;
wherein the first resin has a primary amino group and/or a hydroxyl group, and a secondary amino group, and
the second resin has a (meth)acryloyl group and/or a carbamoyl group, and a hydrophilic group and/or a hydrophobic group.

A second aspect of the present invention is the use of a first liquid and a second liquid, in the surface treatment method according to the first aspect,
wherein the first liquid includes the first resin, and the second liquid includes the second resin.

A third aspect of the present invention is a polyimide product including a layer derived from first resin and a layer derived from second resin on a surface of the polyimide product, sequentially, in this order,
wherein the surface of the polyimide product and the layer derived from the first resin are covalently bonded to each other;
the layer derived from the first resin and the layer derived from the second resin are covalently bonded to each other;
the first resin has a primary amino group and/or a hydroxyl group, and a secondary amino group; and
the second resin has a (meth)acryloyl group and/or a carbamoyl group, and a hydrophilic group and/or a hydrophobic group.

### Effects of the Invention

The present invention can provide a surface treatment method capable of successfully making a treatment target including polyimide on a surface thereof hydrophilic or hydrophobic with a safe operation; a two-liquid type surface treatment liquid that can be suitably used for the surface treatment method; and a surface-treated polyimide product that can be obtained by the surface treatment method.

### BRIEF DESCRIPTION OF THE DRAWINGS

FIG. 1 is a graph showing XPS measurement results of an untreated polyimide film and a surface-treated polyimide film in Example 1 for a nitrogen atom (N).
FIG. 2 is a graph showing XPS measurement results of an untreated polyimide film and a surface-treated polyimide film in Example 1 for a sulfur atom (S).

### DETAILED DESCRIPTION OF THE INVENTION

### <<Surface treatment method>>

A surface treatment method is a method for making a treatment target including polyimide on a surface thereof hydrophilic or hydrophobic. Such a surface treatment method includes: covalently bonding first resin to a surface including polyimide of the treatment target, and
covalently bonding second resin to the first resin. The first resin is a resin having a primary amino group and/or a hydroxyl group, and a secondary amino group. The second resin is a resin having a (meth)acryloyl group and/or a carbamoyl group, and a hydrophilic group and/or a hydrophobic group.

Such a surface treatment method allows for obtaining a polyimide product including a layer derived from the first resin and a layer derived from the second resin in this order on a surface including polyimide of a treatment target including polyimide on a surface thereof. In such a polyimide product, since a layer derived from the second resin having a hydrophilic group and/or a hydrophobic group is firmly covalently bonded via a first resin layer, an effect of the hydrophilic or hydrophobic is excellent, and is not easily deteriorated over time.

### <Treatment target>

As the treatment target, various articles each including polyimide on a surface thereof can be used. In the surface of treatment target, an entire surface thereof may include polyimide, or at least a part of the surface may include polyimide. Note here that in the specification and claims of the present application, resin including an imide bond in the main chain is defined as "polyimide."

In other words, the "polyimide" is not particularly limited to typical polyimide including only an imide bond as a bond for linking each constituent unit in the main chain. Polyester imide, polyether imide, polyamide-imide, and the like, are also included in the "polyimide" in the specification and claims of the present application.

When a material other than polyimide is included in the surface of the treatment target, the other material is not particularly limited. The other material may be organic material or inorganic material such as metal and glass. As material other than polyimide, resin that is an organic material is preferable. Preferable resin includes materials including one or more selected from nylon, polyester, polycarbonate, polyolefin, polystyrene, cellulose, and fluorocarbon resin.

Shapes of the treatment target are not particularly limited. The treatment target may be a flat substrate, and may have a three-dimensional shape such as a spherical shape and a columnar shape. Furthermore, the surface of the treatment target may be smooth, or may have regular or irregular concavity and convexity. Examples of the treatment target having a smooth surface include a polyimide film, a polyimide sheet, and the like.

As described later, since a specific surface area is large, and the like, as the treatment target, powder body, particles such as beads and pellets, a tube, single fiber, composite fiber such as twist yarn, porous material, and the like, each of which includes polyimide resin, are preferable. Porous material including polyimide resin is more preferable. Porous materials including polyimide are made to be hydrophilic or hydrophobic by a surface treatment method described below, and they can be suitably used for a filter that filtrates water or a hydrophilic liquid, a filter that filtrates hydrophobic organic solvent, and the like.

When the treatment target is made of a porous material, examples of the porous material include air-permeable materials including a large number of pores, for example, a sponge, a film or a sheet provided with a large number of through-holes penetrating in a thickness direction, a felt-like material in which a large number of fibers are tangled with each other, and cloth such as woven fabric and non-woven fabric.

As the treatment target, a membrane made of porous material is preferable because a surface area is large and handling is easy.

When the treatment target is a membrane made of a porous material, a thickness of the membrane is not particularly limited. The thickness of the membrane made of a porous material is preferably, for example, 1 µm or more and 100 µm or less or less, more preferably 5 µm or more and 60 µm or less, and particularly preferably 10 µm or more and 50 µm or less. The membrane made of a porous material can be produced by the well-known methods depending on the material. For example, a porous film including polyimide can be produced by, for example, methods disclosed in International Publication No. 2016/020101 and No. 2016/027825.

### <First resin>

In a surface treatment method, firstly, first resin is covalently bonded to a surface including polyimide of the above-described treatment target.

As the first resin, resin having a primary amino group and/or a hydroxyl group, and a secondary amino group is used.

A polyimide molecule included in polyimide can have an acid anhydride group in its terminal. The primary amino group and the hydroxyl group of the first resin can be reacted with an acid anhydride group. Specifically, when the acid anhydride group and the primary amino group are reacted with each other, a carboxy group and an amide bond can be generated. Furthermore, when an acid anhydride group and a hydroxyl group are reacted with each other, a carboxy group and an ester bond can be generated.

Accordingly, by bringing the first resin into contact with the surface of the treatment target, the first resin can be covalently bonded to the surface of the treatment target.

A method for bringing the first resin into contact with the surface of the treatment target is not particularly limited. Typically, the first resin is used as a first liquid including the first resin. When the first liquid is applied to the surface of the treatment target, the first resin can be brought into contact with the surface of the treatment target.

The first resin is not particularly limited as long as the resin has a primary amino group, and/or a hydroxyl group, and a secondary amino group.

Examples of the resin include (meth)acrylic resin, novolac resin, polyester resin, polyamide resin, silicone resin, and the like. Among these resin, (meth)acrylic resin is preferable because a functional group is easily introduced and the content ratio of units each having a functional group is easily adjusted.

In the (meth)acrylic resin, examples of constituent unit having a primary amino group include constituent unis derived from aminoalkyl (meth)acrylate or N-aminoalkyl (meth)acrylamide, for example, 2-amino ethyl(meth)acrylate, 3-amino propyl(meth)acrylate, 4-amino butyl(meth)acrylate, 5-amino pentyl(meth)acrylate, 6-aminohexyl(meth)acrylate, N-(2-aminoethyl) (meth)acrylamide, N-(3-aminopropyl) (meth)acrylamide, N-(4-aminobutyl) (meth)acrylamide, N-(5-pentyl) (meth)acrylamide, N-(6-hexyl) (meth)acrylamide, and the like.

In (meth)acrylic resin, examples of the constituent units having a hydroxyl group include constituent units derived from hydroxyalkyl(meth)acrylate or N-hydroxyalkyl(meth)acrylamide, for example, 2-hydroxy ethyl (meth)acrylate, 3-hydroxypropyl(meth)acrylate, 4-hydroxybutyl(meth)acrylate, 5-hydroxypentyl(meth)acrylate, 6-hydroxyhexyl(meth)acrylate, N-(2-hydroxyethyl) (meth)acrylamide, N-(3-hydroxypropyl) (meth)acrylamide, N-(4-hydroxybutyl) (meth)acrylamide, N-(5-hydroxypentyl) (meth)acrylamide, N-(6-hydroxyhexyl) (meth)acrylamide, and the like.

Furthermore, constituent units derived from hydroxystyrenes such as 4-hydroxystyrene, 3-hydroxystyrene, and 2-hydroxystyrene are also preferable as a constituent unit having a hydroxyl group.

In the (meth)acrylic resin, preferable examples of the constituent units having secondary amino group include constituent units derived from N-alkyl aminoalkyl(meth)acrylate or N-alkylamino alkyl (meth)acrylamide, for example, N-methyl(2-aminoethyl) (meth)acrylate, N-ethyl(2-aminoethyl) (meth)acrylate, N-methyl(3-aminopropyl) (meth)acrylate, N-ethyl(3-aminopropyl) (meth)acrylate, N-methyl(4-aminobutyl) (meth)acrylate, N-ethyl(4-aminobutyl) (meth)acrylate, N-[2-(methylamino) ethyl] (meth)acrylate, N-[2-(ethylamino)ethyl] (meth)acrylate, N-[3-(methylamino)propyl] (meth)acrylate, N-[3-(ethylamino)propyl] (meth)acrylate, N-[4-(methylamino)butyl] (meth)acrylate, N-[4-(ethylamino)butyl] (meth)acrylate, and the like.

The (meth)acrylic resin may have a constituent unit having a hydroxyl group and a secondary amino group. Examples of such a constituent unit include constituent units derived from hydroxyalkyl aminoalkyl(meth)acrylate or N-hydroxyalkyl amino alkyl (meth)acrylamide, for example, N-[2-[(2-hydroxyethyl)amino]ethyl] (meth)acrylate, N-[3-[(2-hydroxyethyl)amino]propyl] (meth)acrylate, N-[4-[(2-hydroxyethyl)amino]butyl] (meth)acrylate, N-[2-[(2-hydroxyethyl)amino]ethyl] (meth)acrylamide, N-[3-[(2-hydroxyethyl)amino]propyl] (meth)acrylamide, N-[4-[(2-hydroxyethyl)amino]butyl] (meth)acrylamide, and the like.

The (meth)acrylic resin may have a constituent unit having a primary amino group and a secondary amino group. Preferable examples of such a constituent unit include constituent units derived from aminoalkyl aminoalkyl(meth)acrylate or N-aminoalkyl aminoalkyl(meth)acrylamide, for example, N-[2-[(2-aminoethyl)amino]ethyl] (meth)acrylate, N-[3-[(2-aminoethyl)amino]propyl] (meth)acrylate, N-[4-[(2-aminoethyl)amino]butyl] (meth)acrylate, N-[2-[(2-aminoethyl)amino]ethyl] (meth)acrylamide, N-[3-[(2-aminoethyl)amino]propyl] (meth)acrylamide, N-[4-[(2-aminoethyl)amino]butyl] (meth)acrylamide, and the like.

In addition to the above, the (meth)acrylic resin may include, for example, constituent units derived from monomers such as unsaturated monocarboxylic acids such as (meth)acrylic acid and crotonic acid; unsaturated dicarboxylic acids such as maleic acid, fumaric acid, citraconic acid, mesaconic acid, and itaconic acid; (meth)acrylic acid alkyl esters such as methyl(meth)acrylate, ethyl(meth)acrylate, isopropyl(meth)acrylate, n-propyl(meth)acrylate, n-butyl(meth)acrylate, isobutyl(meth)acrylate, tert-butyl(meth)acrylate, n- pentyl(meth)acrylate, and isopentyl(meth)acrylate; (meth)acrylic acid aryl esters such as phenyl(meth)acrylate; N-alkyl(meth)acrylamides such as N-methyl(meth)acrylamide, N-ethyl(meth)acrylamide, N-n-propyl(meth)acrylamide, N-isopropyl(meth)acrylamide, N-n-butyl(meth)acrylamide, N-n-pentyl(meth)acrylamide, and N-isopentyl(meth)acrylamide; N-aryl(meth)acrylamide such as N-phenyl(meth)acrylamide; N,N-dialkyl(meth)acrylamides such as N,N-dimethyl(meth)acrylamide, N,N-diethyl(meth)acrylamide, N, N-di-n-propyl(meth)acrylamide, N, N-di-n-butyl(meth)acrylamide, and N, N-di-n-pentyl (meth)acrylamide; styrenes such as styrene, α-methyl styrene, β-methyl styrene, o-methyl styrene, m-methyl styrene, p-methyl styrene, and chlorostyrene.

When the first resin is (meth)acrylic resin, the ratio of the constituent units having a primary amino group and/or a hydroxyl group in the (meth)acrylic resin is preferably 1 mol% or more and 99 mol% or less, more preferably 5 mol% or more and 95 mol% or less, further more preferably 10 mol% or more and 90 mol% or less, and particularly preferably 30 mol% or more and 70 mol% or less with respect to the total constituent units forming the resin. Furthermore, when the first resin is (meth)acrylic resin, the ratio of the constituent units having a secondary amino group in the (meth)acrylic resin is preferably 1 mol% or more and 99 mol% or less, more preferably 5 mol% or more and 95 mol% or less, further preferably 10 mol% or more and 90 mol% or less, and particularly preferably 30 mol% or more and 70 mol% or less.

Note here that when the first resin is (meth)acrylic resin, and the (meth)acrylic resin has a constituent unit having a primary amino group and/or a hydroxyl group, and a secondary amino group, the ratio of the constituent units having the primary amino group and/or the hydroxyl group, and the secondary amino group in the (meth)acrylic resin is preferably 2 mol% or more and 100 mol% or less, more preferably 5 mol% or more and 100 mol% or less, further preferably 10 mol% or more and 100 mol% or less, particularly preferably 30 mol% or more and 100 mol% or less, and the most preferably 50 mol% or more and 100 mol% or less.

Polyethylene imine that is a polymer having the following partial structure is also preferable as the first resin because it is easily dissolved in water, an organic solvent, or the like, and successfully reacted with the surface of the treatment target and the second resin. As the polyethylene imine, any of branched polyethylene imine and linear polyethylene imine can be used.

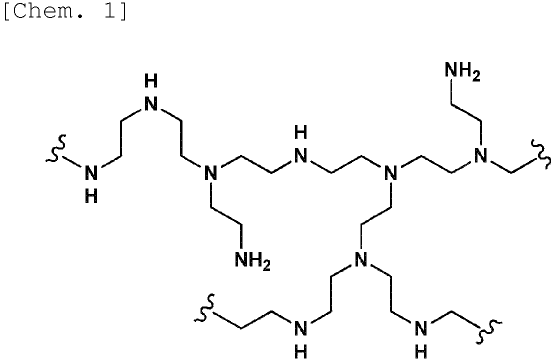

The above-described first resin can be usually used as a first liquid for surface treatment in a state in which it is dissolved in a solvent. Such a first liquid is applied to the surface of the treatment target, the first resin is brought into contact with the surface of the treatment target, and thereby, the first resin can be covalently bonded to the surface of the treatment target.

The first liquid, together with a second liquid including second resin to be described later, can be suitably used for surface-treating the surface including polyimide in a treatment target including polyimide on a surface thereof, as two-liquid type surface treatment liquid.

A solvent included in the first liquid is not particularly limited as long as it is a solvent that does not excessively inhibits the reaction for forming a covalent bond between the first resin and polyimide. The solvent may be water or an organic solvent, or an aqueous solution of an organic solvent. By dissolving the above-described first resin in a solvent at a desired concentration, the first liquid can be prepared.

The concentration of the first resin in the first liquid is not particularly limited. Since the application property to the surface of the treatment target is excellent, the concentration of the first resin in the first liquid is typically preferably 0.1 mass% or more and 50 mass% or less, more preferably 0.1 mass% or more and 20 mass% or less, and particularly preferably 0.1 mass% or more and 10 mass% or less.

The first liquid may include various additives within a range where the objects of the present invention are not impaired. Examples of such additives include a thermal polymerization inhibitor, a photopolymerization inhibitor, an antioxidant, an ultraviolet absorber, a coloring agent, a defoaming agent, a viscosity modifier, and the like.

The above-described first liquid is applied to the surface of the treatment target. The application method of the first liquid is not particularly limited. Specific examples of application methods include a spin coating method, a spray method, a roller coating method, a dipping method, and the like. When the treatment target is a substrate, a sheet, a film, and the like, a spin coating method is preferable as an application method because a first liquid is uniformly applied easily to a surface of the treatment target.

When the treatment target is powder body, particles such as beads and pellets, a tube, single fiber, composite fiber such as twist yarn, porous materials, and the like, a method for applying the first liquid is preferably dipping because the first liquid is uniformly applied easily. Note here that the first liquid may be attached to the surface of the treatment target by subjecting the treatment target to the flowing first liquid instead of dipping the treatment target into a tank filled with the first liquid.

A section on the treatment target to which the first liquid is applied may be rinsed. By applying the first liquid to a surface including polyimide on the treatment target, the first resin can be covalently bonded to the surface including polyimide.

However, on the surface of the treatment target, a certain amount of the first resin that is not bonded to the surface may also be present. When the first resin that is not bonded to the surface of the treatment target and the second resin to be described later are bonded to each other, the second resin that is bonded to the first resin may easily be peeled off from the surface of the treatment target.

On the contrary, when the first resin that is not bonded to the surface of the treatment target is washed out from the surface of the treatment target by rinsing, the second resin is efficiently bonded to the first resin that is bonded to the surface of the treatment target. Accordingly, the deterioration of the effect of the surface treatment due to peeling of the second resin bonded to the first resin that is not bonded to the surface of the treatment target does not easily occur.

Furthermore, rinsing is preferable also because it can thin a layer derived from the first resin.

As mentioned above, the layer derived from the first resin can be formed on the surface of the treatment target. The layer derived from the first resin is only required to be covalently bonded to a surface including polyimide on the treatment target in at least a contact surface of the treatment target. Substantially the entire of the layer derived from the first resin may not be covalently bonded to the surface including polyimide on the treatment target.

A thickness of the layer derived from the first resin is not particularly limited as long as the layer derived from the first resin is covalently bonded to the surface including polyimide on the treatment target. The thickness of the layer derived from the first resin is, for example, preferably 0.1 nm or more and 100 nm or less, more preferably 0.1 nm or more and 20 nm or less, and particularly preferably 0.1 nm or more and 10 nm or less.

<Second resin>

On the layer derived from the first resin formed as described above, a layer derived from the second resin having a (meth)acryloyl group and/or a carbamoyl group, and a hydrophilic group and/or a hydrophobic group is formed.

At this time, reaction occurs between the (meth)acryloyl group and/or the carbamoyl group and a secondary amino group of the first resin, and the covalent bond can be formed between the layer derived from the first resin and the layer derived from the second resin.

As a result, the layer derived from the second resin having a hydrophilic group and/or a hydrophobic group is firmly bonded to the surface including polyimide on the treatment target via the layer derived from the first resin, and thus an excellent hydrophilic effect or a hydrophobic effect can be obtained.

The second resin is not particularly limited as long as the resin has a (meth)acryloyl group and/or a carbamoyl group, and a hydrophilic group and/or a hydrophobic group. Examples of the resin include (meth)acrylic resin, novolac resin, polyester resin, polyamide resin, silicone resin, and the like. Among these resin, (meth)acrylic resin is preferable because a functional group is easily introduced and, the content ratio of units each having a functional group is easily adjusted.

Specific examples of the hydrophilic group include a polyoxyalkylene group (for example, a polyoxyethylene group, a polyoxypropylene group, a polyoxyalkylene group in which an oxyethylene group and an oxypropylene group are block-bonded or randomly-bonded to each other, and the like), an amino group, a carboxy group, a hydroxyl group, a sulfonic acid group, and the like. Furthermore, an organic group including these groups is preferable as the hydrophilic group. Among these hydrophilic groups, groups containing a sulfonic acid group, such as a sulfonic group or an organic group including a sulfonic group are preferable because an excellent hydrophilic effect is achieved. When the second resin has a hydrophilic group, in particular, a sulfonic group, it can not only make the treatment target hydrophilic, but also provide the treatment target with cation exchange capacity.

Furthermore, a cationic group including an anion moiety (counter anion) and a cation moiety that can be bonded to the second resin is also preferable as the hydrophilic group. Examples of the cation moiety constituting the cationic group include a nitrogen-containing cation moiety, a sulfur-containing cation moiety, an iodine-containing cation moiety, and phosphorus-containing cation moiety, and the like.

Anions constituting the anion moiety are not particularly limited. Valency of the anion is not particularly limited, and a monovalent anion or a divalent anion is preferable, and a monovalent anion is more preferable. Suitable examples of the monovalent anion as the anion moiety include a halide ion, a hydroxide ion, a nitrate ion, various types of organic acid ions derived from organic carboxylic acids or organic sulfone acid, and the like. Among them, a halide ion is preferable, a chloride ion, bromide ion, an iodide ion, and a fluoride ion are more preferable, a chloride ion and a bromide ion are further preferable, and a chloride ion is particularly preferable.

Preferable examples of the cationic group include groups including a quaternary ammonium salt group, groups including salts of nitrogen-containing aromatic heterocyclic group, groups including sulfonium salt groups, groups including iodonium salt groups, groups including phosphonium salt groups, and the like.

Among these cationic groups, the groups including quaternary ammonium salt group are preferable because they are easily introduced into the second resin, and have a high hydrophilic effect, and the like.

The quaternary ammonium salt group as the cationic group is preferably a group represented by the following formula (A-I):

-R^{4a}-N⁺R^{1a}R^{2a}R^{3a}·X⁻ (A-I)

(in the formula (A-I), R^{1a}, R^{2a}, and R^{3a} are each independently an alkyl group having 1 or more and 4 or less carbon atoms, bonded to N⁺, and two of R^{1a}, R^{2a}, and R^{3a} may be bonded to each other to form a ring, and R^{4a} is an alkylene group having 1 or more and 4 or less carbon atoms, and X⁻ is a monovalent anion).

The alkyl group having 1 or more and 4 or less carbon atoms as R^{1a}, R^{2a}, and R^{3a} may be linear or branched, and is preferably linear. Suitable specific examples of R^{1a}, R^{2a}, and R^{3a} include a methyl group, an ethyl group, an n-propyl group, and an n-butyl group.

The alkylene group having 1 or more and 4 or less carbon atoms as R^{4a} may be linear or branched, and is preferably linear. Suitable specific examples of R^{4a} include a methylene group, an ethane-1,2-diyl group, a propane-1,3-diyl group, and a butane-1,4-diyl group.

Suitable examples of X⁻ are the same as those of the suitable examples of the anions constituting the anion moiety described above.

From the viewpoint that an excellent hydrophilic effect of the treatment liquid is achieved, the hydrophilic group is preferably a group represented by the following formula (A1):

-NH-R¹ (A1)

(in the formula (A1), R¹ represents an alkyl group having 1 or more and 4 or less carbon atoms substituted with one or more groups selected from the group consisting of an amino group, a sulfonic acid group, and a hydroxyl group, a quaternary ammonium salt group represented by the formula (A-I) described above, or a hydrogen atom).

Specific examples of the hydrophilic group represented by formula (A1) include an amino group, and groups having R¹ represented by the following formulae, and the like.

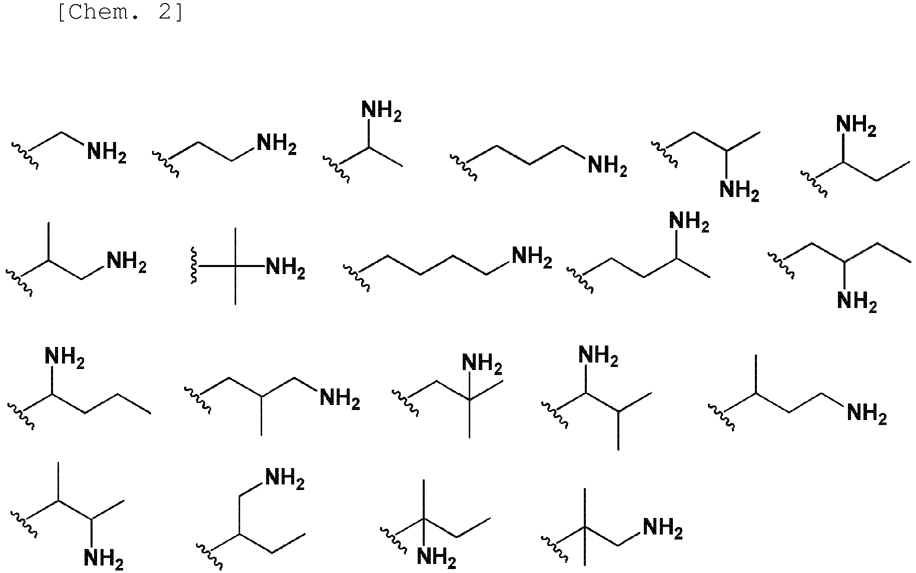

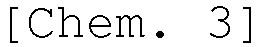

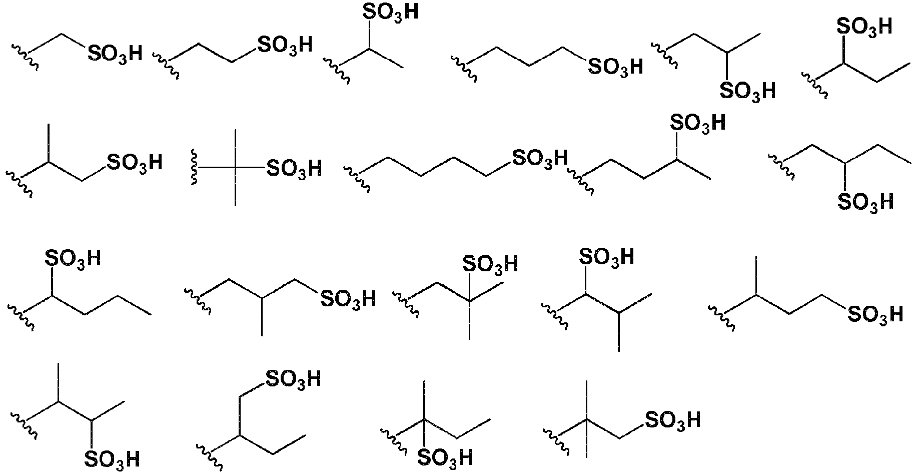

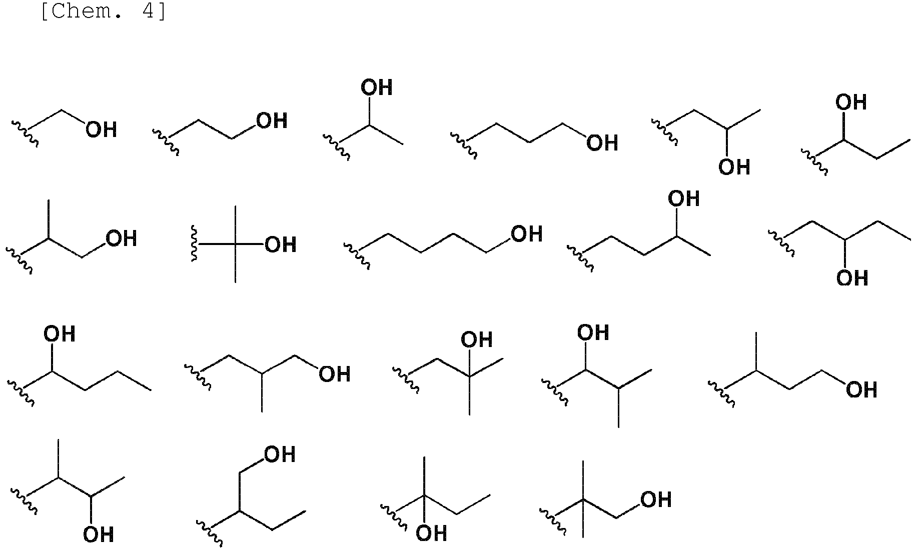

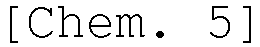

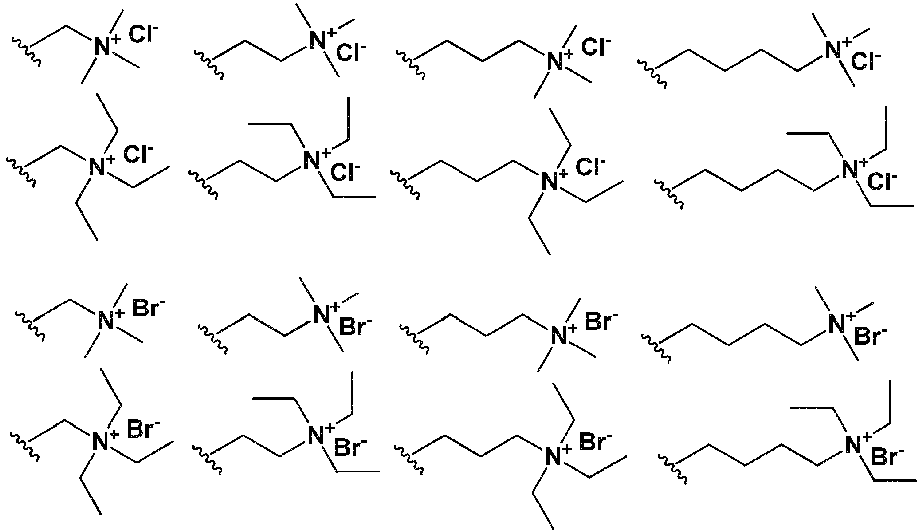

Among the hydrophilic groups represented by the above-mentioned formula (A1), the groups having R¹ represented by the following formulae are more preferable.

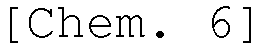

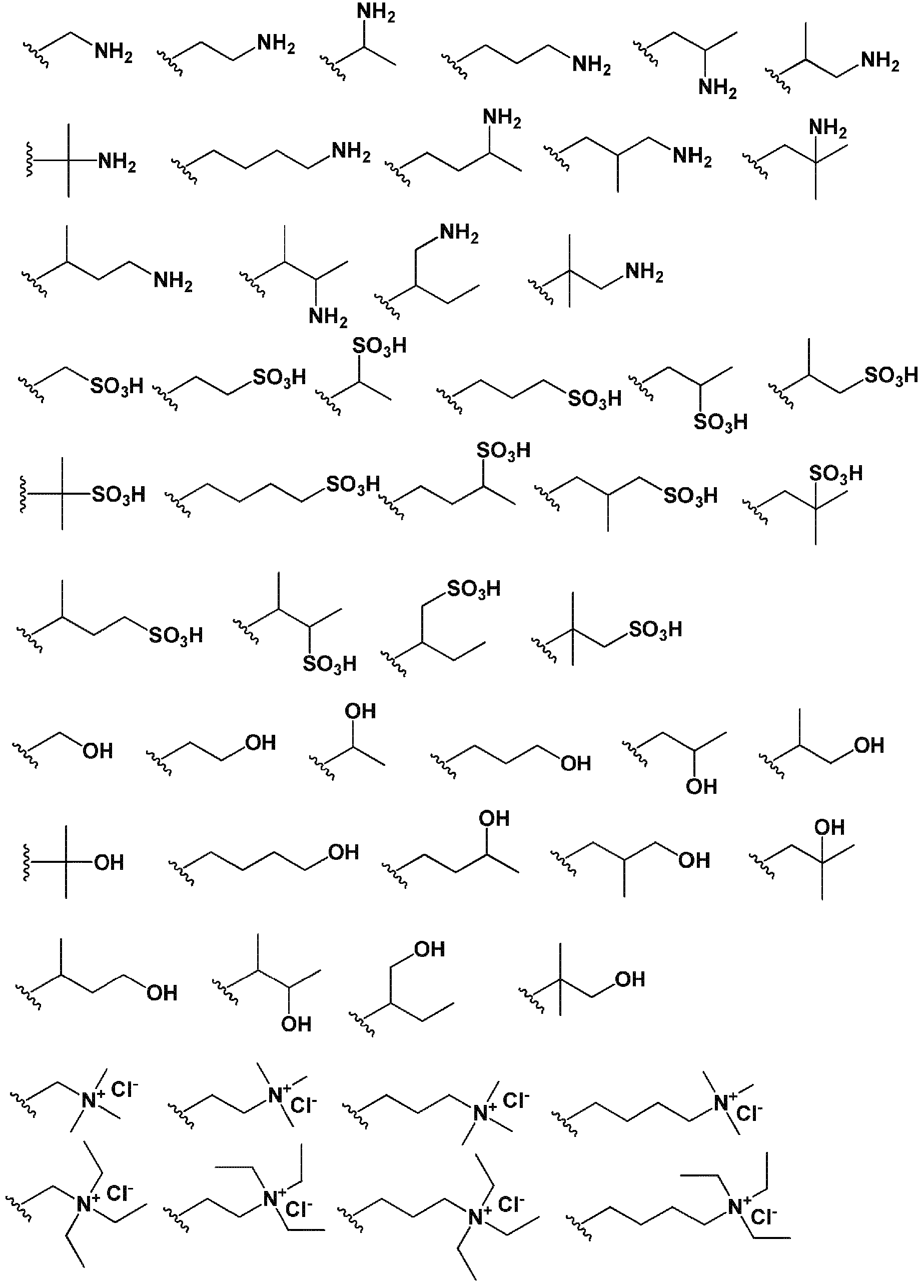

Among the hydrophilic groups represented by the above-mentioned formula (A1), the groups having R¹ represented by the following formulae are particularly preferable.

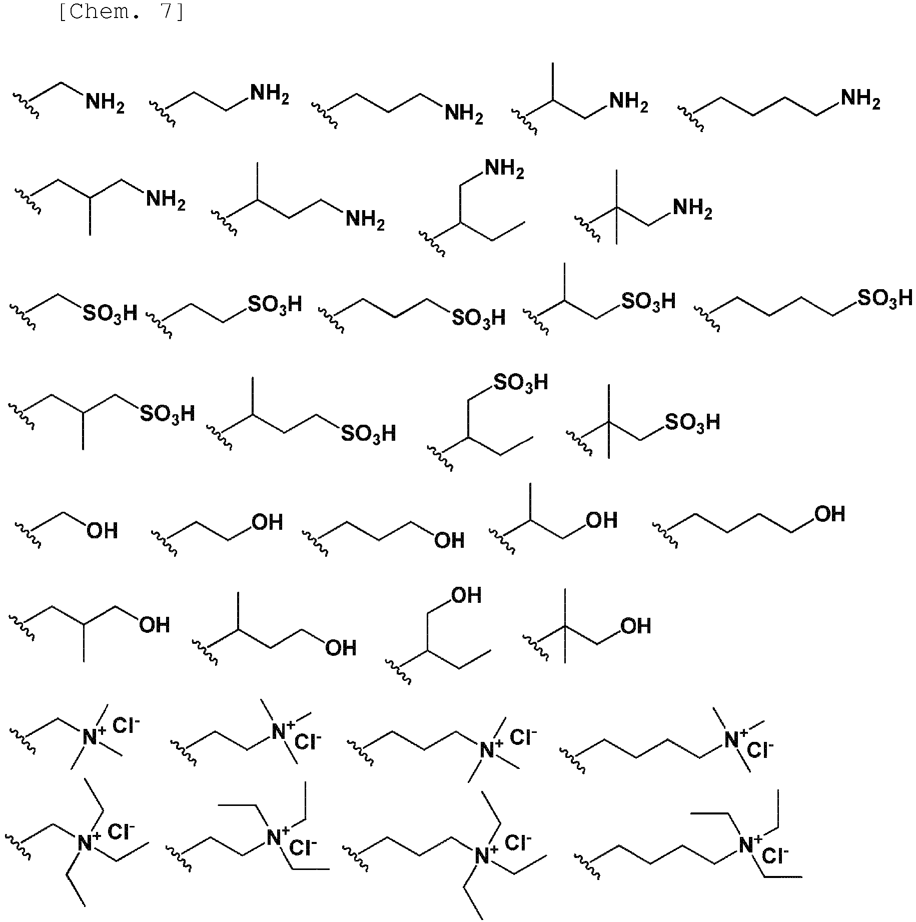

Specific examples of the hydrophobic group include a fluorinated hydrocarbon group, a silyl group, a siloxane group, an alkyl group having 6 or more and 20 or less carbon atoms, and an aromatic hydrocarbon group having 10 or more and 20 or less atoms, and the like.

When the hydrophobic group is a fluorinated hydrocarbon group, the hydrocarbon group constituting a main skeleton of the fluorinated hydrocarbon group may be a linear, branched, or cyclic aliphatic group, or an aromatic hydrocarbon group. The number of carbon atoms of the linear, branched, or cyclic aliphatic group is preferably 1 or more and 20 or less, and more preferably 1 or more and 12 or less.

Preferable examples of the linear or branched aliphatic group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a sec-pentyl group, a tert-pentyl group, an n- hexyl group, an n-heptyl group, an n-octyl group, an n-nonyl group, an n-decyl group, and the like.

Preferable examples of the cyclic aliphatic group include cycloalkyl groups such as a cyclopropyl group, a cyclobutyl group, a cyclopentyl group, a cyclohexyl group, a cycloheptyl group, and a cyclooctyl group; a group in which one hydrogen atom is removed from polycycloalkane such as adamantane, norbornane, isobornane, tricyclodecane, and tetracyclododecane, or a group in which one hydrogen atom is removed from C1-C4 alkyl substitute of these polycycloalkanes.

Preferable examples of the aromatic hydrocarbon group include a phenyl group, a naphthyl group, an anthranil group, a phenanthrenyl group, and a biphenylyl group, and the like. The aromatic hydrocarbon group may be substituted with C1-C4 alky group such as a methyl group and an ethyl group.

The fluorinated hydrocarbon group may be a group in which all the hydrogen atoms of the hydrocarbon group are substituted with a fluorine atom. Specific examples of the fluorinated hydrocarbon group include chain fluorinated alkyl groups such as -CF₃, -CF₂CF₃, -(CF₂)₂CF₃, -(CF₂)₃CF₃, -(CF₂)₄CF₃, -(CF₂)₅CF₃, -(CF₂)₆CF₃, -(CF₂)₇CF₃, -(CF₂)₈CF₃, -(CF₂)₉CF₃, -CH₂CF₃, -CH₂CF₂CF₃, -CH₂(CF₂)₂CF₃, -CH₂(CF₂)₃CF₃, -CH₂(CF₂)₄CF₃, - CH₂(CF₂)₅CF₃, -CH₂(CF₂)₆CF₃, -CH₂(CF₂)₇CF₃, -CH₂(CF₂)₈CF₃, -CH₂CH₂CF₃, -CH₂CH₂CF₂CF₃, -CH₂CH₂(CF₂)₂CF₃, -CH₂CH₂(CF₂)₃CF₃, -CH₂CH₂(CF₂)₄CF₃, -CH₂CH₂(CF₂)₅CF₃, -CH₂CH₂(CF₂)₆CF₃, -CH₂CH₂(CF₂)₇CF₃, and -CH(CF₃)₂; fluorinated aromatic hydrocarbon groups such as a pentafluorophenyl group, an o-trifluoromethyl phenyl group, an m-trifluoromethyl phenyl group, and a p-trifluoromethyl phenyl group; fluorinated alicyclic groups such as an octafluoroadamanthyl group, and the like.

Suitable examples of the silyl group include a group represented by the following formula (A2):

-SiR^{5a}R^{6a}-(-O-SiR^{5a}R^{6a}-)ₙ-R^{7a} (A2),

(wherein R^{5a}, R^{6a}, and R^{7a} are, each independently, a hydrocarbon group having 1 or more and 6 or less carbon atoms, and n is an integer of 0 or more).

It is preferable that R^{5a}, R^{6a}, and R^{7a} are, each independently, a methyl group, an ethyl group, or a phenyl group, and more preferable that all of R^{5a}, R^{6a}, and R^{7a} are a methyl group. In the formula (A2), the upper limit of n is not particularly limited within a range in which the object of the present invention is not impaired.
"n" is preferably an integer of 0 or more and 35 or less, and more preferably an integer of 0 or more and 10 or less.

Suitable specific examples of the silyl group include a trimethyl silyl group, a triethyl silyl group, a tripropyl silyl group, a triisopropyl silyl group, a tert-butyldimethyl silyl group, a triphenyl silyl group, and the like.

Suitable examples of the siloxane group include groups represented by the above-mentioned formula (A2), wherein n is 1 or more.

As the second resin, a polymer of a monomer having an unsaturated bond is preferable because various functional groups are easily introduced and the amount of the functional group is easily adjusted. Such a polymer may be a homopolymer or a copolymer.

In this case, the hydrophilic or the hydrophobic group of the second resin is preferably a group derived from a monomer represented by the following formula (A3):

CH₂=CR²-(R³)ₐ-CO-R⁴ (A3)

(in the formula (A3), R² is a hydrogen atom or a methyl group, R³ is a divalent hydrocarbon group, a is 0 or 1, R⁴ is a hydrogen atom, -O-R⁵, or -NH-R⁵, and R⁵ is a hydrogen atom, a hydrophilic group, a hydrophobic group, a hydrocarbon group containing a hydrophilic group, or a hydrocarbon group containing a hydrophobic group).

In the above-mentioned formula (A3), R³ is a divalent hydrocarbon group. The number of carbon atoms of the divalent hydrocarbon group is not particularly limited within a range in which the object of the present invention is not impaired. Because the second resin is easily obtained or prepared, the number of carbon atoms of the divalent hydrocarbon group as R³ is preferably 1 or more and 20 or less, more preferably 1 or more and 12 or less, particularly preferably 1 or more and 10 or less, and the most preferably 1 or more and 6 or less.

The divalent hydrocarbon group as R³ may be an aliphatic group, an aromatic group, and a hydrocarbon group including an aliphatic moiety and an aromatic moiety. When the divalent hydrocarbon group is an aliphatic group, the aliphatic group may be a saturated aliphatic group or an unsaturated aliphatic group. Furthermore, a structure of the aliphatic group may be a linear, branched, or cyclic, or a combination of these structures.

Specific examples of R³ include a methylene group, an ethane-1,2-diyl group, an ethane-1,1-diyl group, a propane-1,3-diyl group, a propane-1,1-diyl group, a propane-2,2-diyl group, an n-butane-1,4-diyl group, an n-pentane-1,5-diyl group, an n-hexane-1,6-diyl group, an n-heptane-1,7-diyl group, an n-octane-1,8-diyl group, an n-nonane-1,9-diyl group, an n-decane-1,10-diyl group, an o-phenylene group, an m-phenylene group, a p-phenylene group, a naphthalene-2,6-diyl group, a naphthalene-2,7-diyl group, a naphthalene-1,4-diyl group, a biphenyl -4,4'-diyl group, and the like.

R⁴ is a hydrogen atom, -O-R⁵, or -NH-R⁵, and R⁵ is a hydrogen atom, a hydrophilic group, a hydrophobic group, and a hydrocarbon group containing a hydrophilic group, or a hydrocarbon group containing a hydrophobic group.

The hydrocarbon group constituting a main skeleton of the group of R⁵ may be a linear, branched, or cyclic aliphatic group, or an aromatic hydrocarbon group.

The number of carbon atoms of the linear, branched, or cyclic aliphatic group is preferably 1 or more and 20 or less, and more preferably 1 or more and 12 or less.

Suitable examples of the linear or branched aliphatic group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a sec-pentyl group, a tert-pentyl group, an n- hexyl group, an n-heptyl group, an n-octyl group, an n-nonyl group, an n-decyl group, and the like.

Suitable examples of the cyclic aliphatic group include cycloalkyl groups such as a cyclopropyl group, a cyclobutyl group, a cyclopentyl group, a cyclohexyl group, a cycloheptyl group, and a cyclooctyl group; groups in which one hydrogen atom is removed from polycycloalkanes such as adamantane, norbornane, isobornane, tricyclodecane, and tetracyclododecane; and groups in which one hydrogen atom is removed from C1-C4 alkyl substitutes of the above-listed polycycloalkanes, or the like.

Suitable examples of the aromatic hydrocarbon group include a phenyl group, a naphthyl group, an anthranil group, a phenanthrenyl group, a biphenylyl group, and the like.

The aromatic hydrocarbon group may be substituted with a C1-C4 alkyl group such as a methyl group and an ethyl group.

Among the constituent units derived from a monomer represented by the formula (A3), suitable examples of the constituent units having a hydrophobic group include the following units a3-1 to a3-22.

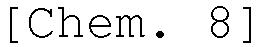

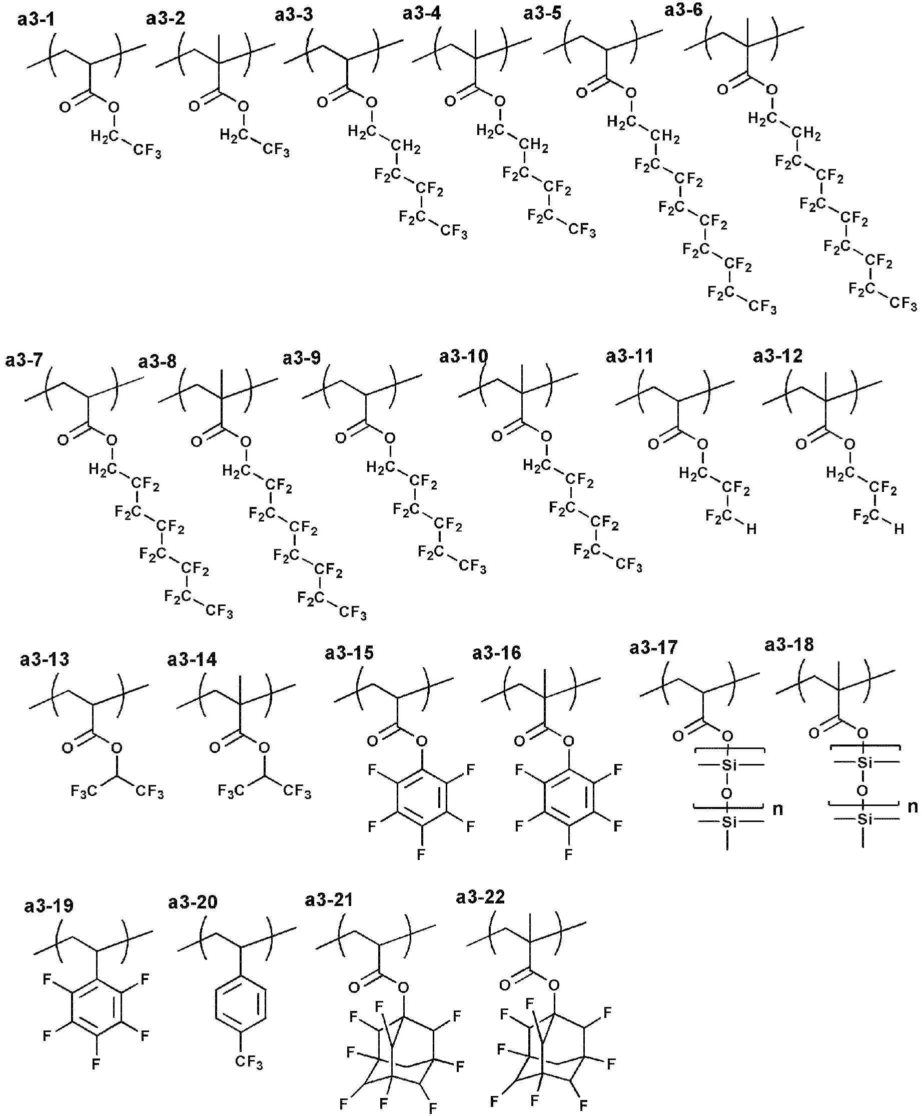

Among the constituent units derived from a monomer represented by the formula (A3), suitable examples of the constituent units having a hydrophilic group include the following units a3-23 to a3-34. R^{a} in the following formula is a hydrogen atom or a methyl group.

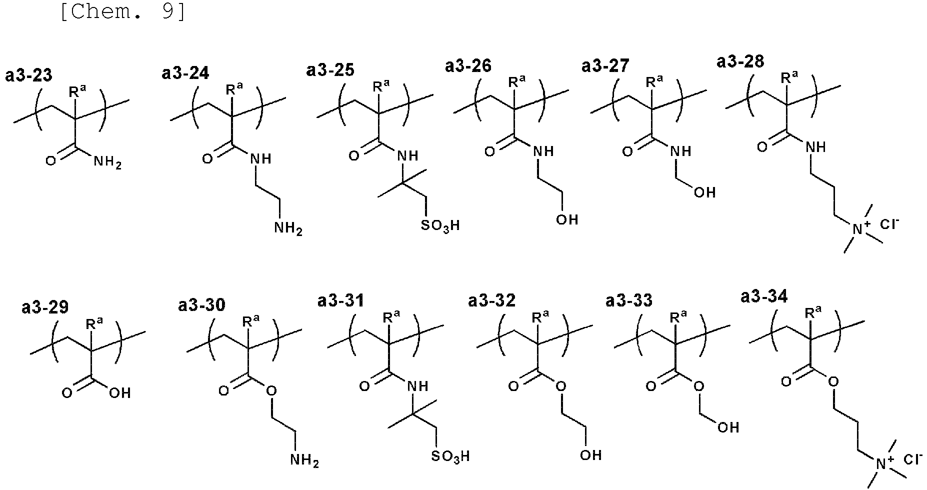

Furthermore, the second resin has a (meth)acryloyl group and/or a carbamoyl group as a reactive group for forming a covalent bond between the second resin and the first resin. A method for introducing a (meth)acryloyl group and/or a carbamoyl group into the second resin is not particularly limited.

When the second resin is a polymer of a monomer having an unsaturated bond, examples of a method for introducing a (meth)acryloyl group into the second resin include a method of allowing a constituent unit having a hydroxyl group, or a constituent unit having a primary amino group to react with (meth)acrylic acid halide such as (meth)acryloyl chloride.

Preferable examples of the constituent unit having a hydroxyl group or the constituent unit having a primary amino group include constituent units represented by a3-24, a3-26, a3-27, a3-30, a3-32, and a3-33 mentioned above.

Also by reacting an epoxy group in the constituent unit derived from a monomer having an epoxy group such as glycidyl(meth)acrylate with (meth)acrylic acid, a (meth)acryloyl group can be introduced into the second resin.

When the second resin is a polymer of a monomer having an unsaturated bond, as a method for introducing a carbamoyl group into the second resin, typically a method using (meth)acrylamide as a monomer, and introducing a constituent unit represented by a3-23 into the second resin is preferable.

When the second resin is a polymer of a monomer having an unsaturated bond, such a polymer may include constituent units other than the constituent unit derived from the monomer represented by the formula (A3) described above, and the constituent unit having a (meth)acryloyl group and/or a carbamoyl group within a range in which the object of the present invention is not impaired.

Examples of the other constituent units include constituent units derived from monomers such as methyl(meth)acrylate, ethyl(meth)acrylate, isopropyl(meth)acrylate, n-propyl(meth)acrylate, n-butyl(meth)acrylate, isobutyl(meth)acrylate, tert-butyl(meth)acrylate, n-pentyl(meth)acrylate, isopentyl(meth)acrylate, phenyl(meth)acrylate, N-methyl(meth)acrylamide, N-ethyl(meth)acrylamide, N-n-propyl(meth)acrylamide, N-isopropyl(meth)acrylamide, N-n-butyl(meth)acrylamide, N-n-pentyl(meth)acrylamide, N-isopentyl(meth)acrylamide, N-phenyl(meth)acrylamide, N,N-dimethyl(meth)acrylamide, N,N-diethyl(meth)acrylamide, N,N-din-propyl(meth)acrylamide, N,N-di-n-butyl(meth)acrylamide, N,N-di-n-pentyl(meth)acrylamide, styrene, α-methyl styrene, β-methyl styrene, o-methyl styrene, m-methyl styrene, p-methyl styrene, and chlorostyrene.

When the second resin is a polymer of a monomer having an unsaturated bond, the content of constituent units having a (meth)acryloyl group and/or a carbamoyl group in the polymer is preferably 1 mol% or more and 99 mol% or less, more preferably 1 mol% or more and 50 mol% or less, and particularly preferably 1 mol% or more and 25 mol% or less with respect to the total constituent units forming the polymer.

When the second resin is a polymer of a monomer having an unsaturated bond, the content of constituent units having a hydrophilic group or a hydrophobic group in the polymer is preferably 10 mol% or more and 99 mol% or less, more preferably 20 mol% or more and 95 mol% or less, and particularly preferably 20 mol% or more and 90 mol% or less with respect to the total constituent units forming the polymer.

Note here that the constituent units having a hydrophilic group or a hydrophobic group may be a constituent unit capable of forming a covalent bond through a reaction with a secondary amino group of a layer derived from the first resin.

The above-described second resin is usually used as a second liquid for surface treatment in a state in which it is dissolved in a solvent as in the first resin. Such a second liquid is applied to the surface of the treatment target in which the first resin is bonded to the surface including polyimide, the second resin is brought into contact with the layer derived from the first resin on the treatment target. Thus, the layer derived from the first resin and the layer derived from the second resin can be covalently bonded to each other. As described above, the above-described first liquid and second liquid including the second resin are combined and used as a two-liquid type surface treatment liquid for surface treatment of the surface including polyimide in the treatment target including polyimide to a surface thereof.

A solvent included in the second liquid is not particularly limited as long as it does not excessively impair the reaction for forming a covalent bond between the second resin and the layer derived from the first resin. The solvent may be water or an organic solvent, or an aqueous solution of an organic solvent.

The above-described second resin is dissolved in a solvent at a desired concentration to prepare the second liquid. The concentration of the second resin in the second liquid is not particularly limited. Since the application property to the surface of the treatment target is excellent, the concentration of the second resin in the second liquid is typically preferably 0.1 mass% or more and 50 mass% or less, more preferably 0.1 mass% or more and 20 mass% or less, and particularly preferably 0.1 mass% or more and 10 mass% or less.

Similar to the first liquid, the second liquid may include various additives within a range where the objects of the present invention are not impaired. Examples of such additives include a thermal polymerization inhibitor, a photopolymerization inhibitor, an antioxidant, an ultraviolet absorber, a coloring agent, a defoaming agent, a viscosity modifier, and the like.

The above-described second liquid is applied to a layer, which is derived from the first resin provided on the surface of the treatment target. The application method of the second liquid is not particularly limited, and is similar to the application method of the first liquid.

A part of the treatment target in which the layer derived from the second resin is formed may be rinsed. By applying the second liquid to the layer derived from the first resin, the second resin can be covalently bonded to the layer derived from the first resin can be present.

However, in the layer derived from the second resin, a certain amount of second resin that is not bonded to the layer derived from the first resin.

In this case, the second resin that is not bonded to the layer derived from the first resin may be easily peeled off from the surface of the treatment target. Then, after the layer derived from the second resin is formed, the layer derived from the second resin is rinsed with water, an organic solvent, or the like, and thereby, it is possible to wash out the second resin that is not bonded to the layer derived from the first resin. Thus, since the second resin is not easily eliminated from the surface of the treatment target, the hydrophilic property and the hydrophobic property of a surface of a surface-treated polyimide product is not easily changed over time. Furthermore, rinsing is preferable also because it can thin the layer derived from the second resin.

As described above, the layer derived from the second resin is formed on the layer derived from the first resin. The layer derived from the second resin is only required to be covalently bonded to the first resin at least on a contact surface with the layer derived from the first resin. Substantially the entire of the layer derived from the second resin may not be covalently bonded to the first resin.

A thickness of the layer derived from the second resin is not particularly limited as long as the layer derived from the second resin is covalently bonded to the surface including polyimide on the treatment target. The thickness of the layer derived from the second resin is, for example, preferably 0.1 nm or more and 100 nm or less, more preferably 0.1 nm or more and 20 nm or less, and particularly preferably 0.1 nm or more and 10 nm or less.

The above-described method can successfully make a treatment target including polyimide on a surface thereof hydrophilic or hydrophobic with a safe operation.

### EXAMPLES

Hereinafter, the present invention will be explained more specifically by showing Examples.

### [Example 1]

A porous polyimide film was used as a treatment target. A first liquid including branched polyethylene imine in water at a concentration of 1 mass% was applied onto the polyimide film by dip-coating, followed by being rinsed with pure water to form a 2 nm-thick polyethylene imine layer on a surface of the polyimide film.

A second liquid, which includes second resin including the following constituent units in a mixed solvent including 10 mass% of water and 90 mass% of IPA (isopropyl alcohol) at a concentration of 1 mass%, was applied to a surface of the polyethylene imine layer on the polyimide film by dip-coating, followed by being rinsed with pure water to form a 2-nm layer derived from the second resin.

Note here that in the following formula, each number at the right lower of parenthesis denotes a content (mol%) of each constituent unit with respect to the total constituent units in resin.

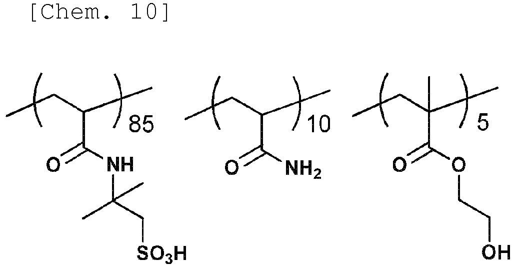

### [Comparative Example 1]

A porous polyimide film was used as a treatment target. On the polyimide film, without performing polyethylene imine treatment, a second liquid, including the second resin used in Example 1 in a mixed solvent of 10 mass% of water and 90 mass% of IPA (isopropyl alcohol) at a concentration of 1 mass%, was applied to the polyimide film by dip-coating, followed by being rinsed with pure water to form a 2-nm layer derived from the second resin.

In the porous polyimide films obtained in Example 1 and Comparative Example 1, the porous polyimide films immediately after surface treatment and the porous polyimide films that were subjected to a scratch test in which a #0000 steel wool was reciprocated 50 times with load set to 250 g after surface treatment were evaluated in terms of the contact angle and the chemical resistance according to the following method. These evaluation results are shown in Table 1.

### <Contact angle evaluation>

The water contact angle was measured using Dropmaster 700 (manufactured by Kyowa Interface Science Co., Ltd.) as follows: a pure water droplet (2.0 µL) was dropped onto a surface-treated surface of a silicon wafer substrate, and the contact angle was measured after 10 seconds of dropping.

### <Chemical resistance>

The water contact angle of a silicon wafer that had been dipped in water or isopropyl alcohol (IPA) for 72 hours at room temperature was measured.

**[Table 1]**

| | | Water contact angle (°) | Chemical resistance (Water contact angle after dipping (°)) | |
|---|---|---|---|---|
| | | | Water | IPA |
| Example 1 | Initial value | 8 | 8 | 10 |
| | Value after scratch test | 8 | 8 | 9 |
| Comparative Example 1 | Initial value | 12 | 13 | 68 |
| | Value after scratch test | 70 | 13 | 68 |

From Table 1, it is shown that, in Example 1, the water contact angle and the water contact angle after dipping in water or IPA are not different between the porous polyimide film immediately after treatment and the porous polyimide film after the scratch test.

These results show that in the porous polyimide film obtained in Example, a stable layer including the layer derived from the first resin and the layer derived from the second resin, which is not easily peeled off by abrasion with steel wool, and which is firmly bonded to the surface of porous polyimide film, is formed.

On the other hand, according to Comparative Example in Table 1, it is shown that in a case of providing the layer derived from the second resin without forming a primer layer, the water contact angle of the porous polyimide film after the scratch test was remarkably increased as compared with the water contact angle of the porous polyimide film immediately after treatment. Furthermore, in the porous polyimide film obtained in Comparative Example 1, in a case of dipping in water or IPA before the scratch test, the effect of making hydrophilic by the second resin may be maintained. However, in a case of dipping in water or IPA after the scratch test, the water contact angle of the surface of the porous polyimide film was remarkably increased. In other words, it is shown that the layer including the second resin formed on the porous polyimide film obtained in Comparative Example 1, is easily peeled off by abrasion with steel wool.

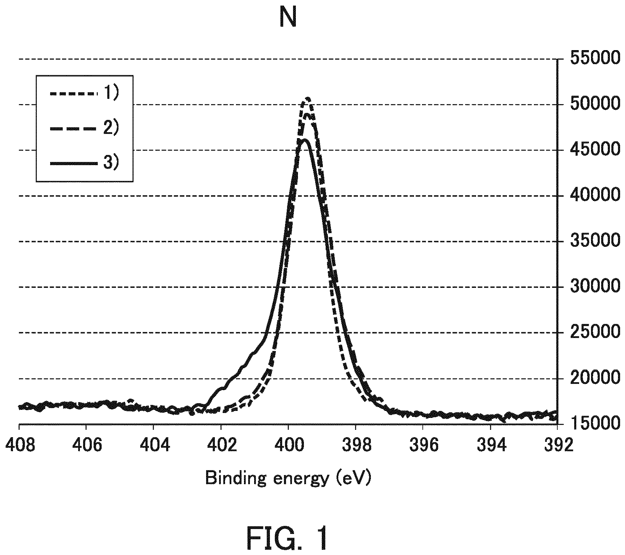

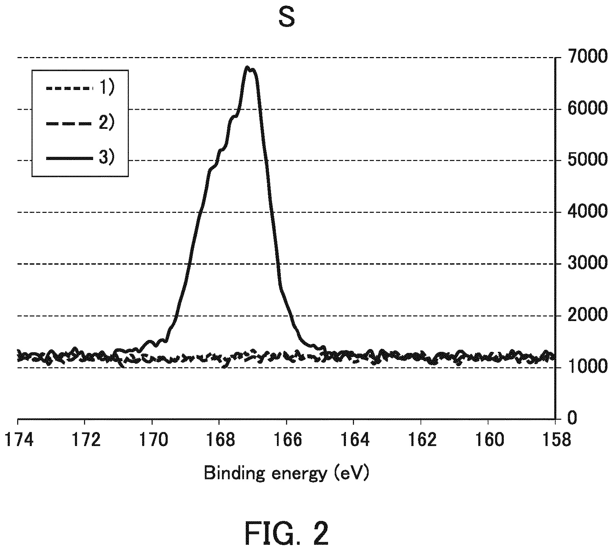

Furthermore, in order to verify the formation of a covalent bond on the surface of the porous polyimide film, the surface of untreated or surface-treated polyimide film was subjected to X-ray photoelectron spectroscopy (XPS spectroscopy) for a nitrogen atom (N) and a sulfur atom (S). Note here that when the porous film was used as a test sample, it is difficult to carry out accurate XPS spectroscopy. Therefore, as a measurement test sample, a non-porous and flat polyimide film made of a material similar to a porous polyimide film was used. Specifically, XPS spectroscopy was carried out to a not-surface-treated non-porous and flat polyimide film, a polyimide film obtained by laminating a polyethylene imine layer by the method described in Example 1, and a polyimide film obtained by laminating a polyethylene imine layer and a layer derived from the second resin sequentially in this order by the method described in Example 1. FIG. 1 is a graph showing XPS measurement results for a nitrogen atom (N). FIG. 2 is a graph showing XPS measurement results for a sulfur atom (S).

In FIGs. 1 and 2, line 1) shows the XPS measurement result of the untreated polyimide film, line 2) shows the XPS measurement result of the polyimide film provided with a polyethylene imine layer, and line 3) shows the XPS measurement result of the polyimide film provided with a polyethylene imine layer and a layer derived from the second resin.

In graphs of the XPS measurement data shown in FIGs. 1 and 2, the value of abscissa shows binding energy (eV) of photoelectron, and the value of ordinate shows emitted photoelectron intensity.

From FIG. 1, it is shown that values of the peak tops of peaks around 399 eV derived from the C-N binding is decreased sequentially from the line 1), line 2), and line 3), in this order. Furthermore, from FIG. 1, it is shown that emitted photoelectron intensity around 401 eV derived from the ammonium salt is increased sequentially from the line 1), line 2), and line 3), in this order. The ammonium salt is derived from an ammonium salt group derived from an amino group of polyethylene imine and ammonium sulfonate produced when a sulfonic acid group of the second resin absorbs amines.

From these results, it is shown that on the surface of a polyimide film, the polyethylene imine and the second resin are bonded in this order to form a covalent bond.

Furthermore, in FIG. 2 showing the measurement results of XPS for a sulfur atom (S), a peak is observed only in the line 3). This shows that in a porous polyimide film provided with a polyethylene imine layer and a layer derived from the second resin, the outermost surface layer is modified by second resin having a sulfonic group.

From the XPS measurement results above, since the reactivity of the surface is not different between the porous polyimide film and a non-porous and flat polyimide film, it is shown that on a surface of a surface-treated porous polyimide film obtained in Example 1, polyethylene imine and second resin are bonded in this order to form a covalent bond.

### [Example 2]

The surface-treated porous polyimide film produced in Example 1 was attached to a PFA filter holder (manufactured by Advantec), and then 500 mL of pure water was allowed to flow so as to wash the porous polyimide film. Then, 200 mL of OK73 thinner (manufactured by TOKYO OHKA KOGYO CO., LTD.) to which a metal standard solution had not been added was allowed to flow to the surface-treated porous polyimide film, so that the film was mixed with a solvent. Then, a test solution was allowed to flow through a surface-treated ultra-high molecular weight polyethylene filter, and 200 mL of solution that flows first was discarded, and a sample for measuring metal ion concentration was collected. As the test solution, OK73 thinner (manufactured by TOKYO OHKA KOGYO CO., LTD.), in which a metal standard solution XSTC-622B (manufactured by SPEX) had been added to each metallic element so as to have a concentration of 50 mass ppb, was used. The collected samples for measuring metal ion concentration were used, and the amount C of metal ion (mass ppb) in the sample was measured by inductively coupled plasma mass spectrometer (ICP-MS). The measured amount C of metal ion was used, and the metal ion removal rate (%) for each metal ion described in Table 2 was calculated according to the following formula: Metal ion removal rate (%) = 100 - C (mass ppb)/50 (mass ppb) × 100 The metal ion removal rates are shown in Table 2.

**[Table 2]**

| Ion species | Example 1 |
|---|---|
| | Metal ion removal rate |
| Li | 57% |
| Na | 68% |
| Mg | 78% |
| Al | 77% |
| K | 69% |
| Ca | 89% |
| Ti | 68% |
| V | 60% |
| Cr | 99% |
| Mn | 97% |
| Fe | 97% |
| Co | 89% |
| Ni | 91% |
| Cu | 85% |
| Zn | 85% |
| Ag | 67% |
| Cd | 66% |
| Sn | 94% |
| Ba | 76% |
| Pb | 68% |
| As | 54% |
| Sr | 93% |
| Zr | 75% |
| Ag | 42% |
| Cs | 95% |
| U | 94% |
| Rb | 52% |

As is apparent from Table 2, when the surface of the porous polyimide film is treated using the second resin including a constituent unit having a sulfonic acid group used in Example 1, the porous polyimide film is provided with cation exchange capacity. Note here that in the surface-treated porous polyimide film obtained in Example 1, as described above, a layer including the second resin is firmly bonded to the surface of the porous polyimide film via a layer including the first resin.

### [Example 3]

A surface-treated porous polyimide film was obtained in the same manner as in Example 1 except that branched polyethylene imine was changed to linear polyethylene imine, and the second resin was changed to resin including the following constituent units. Note here that in the following formula, each number at the right lower of parenthesis denotes a content (mol%) of each constituent unit with respect to the total constituent units in resin.

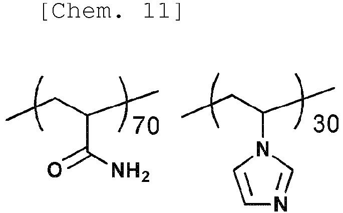

Measurement test of the metal ion removal rate using the obtained surface-treated porous polyimide film was carried out in the same manner as in Example 2 except that ion species to be measured were changed to Mg ion, Al ion, Ti ion, Cr ion, Fe ion, As ion, Zr ion, Sn ion, Ba ion, Cs ion, and U ion. The test results are shown in Table 3.

**[Table 3]**

| Ion species | Example 3 |
|---|---|
| | Metal ion removal rate |
| Mg | 57% |
| Al | 98% |
| Ti | 69% |
| Cr | 57% |
| Fe | 91% |
| As | 53% |
| Zr | 99% |
| Sn | 98% |
| Ba | 45% |
| Cs | 92% |
| U | 97% |

As is apparent from Table 3, when the surface of the porous polyimide film was treated using the second resin including a constituent unit having a hydrophilic group used in Example 3, the porous polyimide film is provided with a cation exchange capacity.

## Claims

1. A surface treatment method for making a treatment target comprising polyimide on a surface thereof hydrophilic or hydrophobic, the method comprising:
covalently bonding a first resin to the surface comprising polyimide of the treatment target; and
covalently bonding a second resin to the first resin;
wherein the first resin has a primary amino group and/or a hydroxyl group, and a secondary amino group, and
the second resin has a (meth)acryloyl group and/or a carbamoyl group, and a hydrophilic group and/or a hydrophobic group.

2. The surface treatment method according to claim 1, wherein the first resin is polyethylene imine.

3. The surface treatment method according to claim 1 or 2, wherein the treatment target is a porous material comprising polyimide resin.

4. The surface treatment method according to claim 3, wherein the treatment target is a membrane made of the porous material.

5. The surface treatment method according to any one of claims 1 to 4, wherein the second resin has the hydrophilic group.

6. The surface treatment method according to claim 5, wherein the second resin comprises a group containing a sulfonic acid group as the hydrophilic group.

7. Use of the first resin and the second resin for the surface treatment in the surface treatment method according to claim 1, **characterized in that** the first resin is used as a first liquid including the first resin dissolved in a solvent, and
the second resin is used as a second liquid including the second resin dissolved in a solvent.

8. The use according to claim 7, wherein the first resin is polyethylene imine.

9. The use according to claim 7 or 8, wherein the second resin has the hydrophilic group.

10. The use according to claim 9, wherein the second resin comprises a group containing a sulfonic acid group as the hydrophilic group.

11. A polyimide product comprising a layer derived from a first resin and a layer derived from a second resin on a surface of the polyimide product, sequentially, in this order,
wherein the surface of the polyimide product and the layer derived from the first resin are covalently bonded to each other;
the layer derived from the first resin and the layer derived from the second resin are covalently bonded to each other;
the first resin has a primary amino group and/or a hydroxyl group, and a secondary amino group; and
the second resin has a (meth)acryloyl group and/or a carbamoyl group, and a hydrophilic group and/or a hydrophobic group.

12. The polyimide product according to claim 11, wherein the first resin is polyethylene imine.

13. The polyimide product according to claim 11 or 12, wherein the polyimide product is a porous material comprising polyimide resin.

14. The polyimide product according to claim 13, wherein the polyimide product is a membrane made of the porous material.

15. The polyimide product according to any one of claims 11 to 14, wherein the second resin has a hydrophilic group.

16. The polyimide product according to claim 15, wherein the second resin comprises a group containing a sulfonic acid group as the hydrophilic group.

## Patentansprüche

1. Oberflächenbehandlungsverfahren, um ein Polyimid umfassendes Behandlungsziel auf einer Oberfläche davon hydrophil oder hydrophob zu machen, wobei das Verfahren umfasst:
kovalentes Binden eines ersten Harzes an die Polyimid umfassende Oberfläche des Behandlungsziels; und
kovalentes Binden eines zweiten Harzes an das erste Harz;
wobei das erste Harz eine primäre Aminogruppe und/oder eine Hydroxylgruppe, und eine sekundäre Aminogruppe aufweist, und
das zweite Harz eine (Meth)acryloylgruppe und/oder eine Carbamoylgruppe, und eine hydrophile Gruppe und/oder eine hydrophobe Gruppe aufweist.

2. Oberflächenbehandlungsverfahren nach Anspruch 1, wobei das erste Harz Polyethylenimin ist.

3. Oberflächenbehandlungsverfahren nach Anspruch 1 oder 2, wobei das Behandlungsziel ein poröses Material, umfassend Polyimidharz, ist.

4. Oberflächenbehandlungsverfahren nach Anspruch 3, wobei das Behandlungsziel eine Membran ist, welche aus dem porösen Material hergestellt ist.

5. Oberflächenbehandlungsverfahren nach einem der Ansprüche 1 bis 4, wobei das zweite Harz die hydrophile Gruppe aufweist.

6. Oberflächenbehandlungsverfahren nach Anspruch 5, wobei das zweite Harz eine Gruppe umfasst, welche eine Sulfonsäuregruppe als die hydrophile Gruppe enthält.

7. Verwendung des ersten Harzes und des zweiten Harzes für die Oberflächenbehandlung in dem Oberflächenbehandlungsverfahren nach Anspruch 1, **dadurch gekennzeichnet, dass** das erste Harz als eine erste Flüssigkeit verwendet wird, umfassend das erste Harz, gelöst in einem Lösungsmittel, und
das zweite Harz als eine zweite Flüssigkeit verwendet wird, umfassend das zweite Harz, gelöst in einem Lösungsmittel.

8. Verwendung nach Anspruch 7, wobei das erste Harz Polyethylenimin ist.

9. Verwendung nach Anspruch 7 oder 8, wobei das zweite Harz die hydrophile Gruppe aufweist.

10. Verwendung nach Anspruch 9, wobei das zweite Harz eine Gruppe umfasst, welche eine Sulfonsäuregruppe als die hydrophile Gruppe enthält.

11. Polyimidprodukt, umfassend eine Schicht, abgeleitet von einem ersten Harz, und eine Schicht, abgeleitet von einem zweiten Harz, auf einer Oberfläche des Polyimidprodukts, nacheinander, in dieser Reihenfolge,
wobei die Oberfläche des Polyimidprodukts und die von dem ersten Harz abgeleitete Schicht kovalent aneinander gebunden sind;
die von dem ersten Harz abgeleitete Schicht und die von dem zweiten Harz abgeleitete Schicht kovalent aneinander gebunden sind;
das erste Harz eine primäre Aminogruppe und/oder eine Hydroxylgruppe, und eine sekundäre Aminogruppe aufweist; und
das zweite Harz eine (Meth)acryloylgruppe und/oder eine Carbamoylgruppe, und eine hydrophile Gruppe und/oder eine hydrophobe Gruppe aufweist.

12. Polyimidprodukt nach Anspruch 11, wobei das erste Harz Polyethylenimin ist.

13. Polyimidprodukt nach Anspruch 11 oder 12, wobei das Polyimidprodukt ein poröses Material, umfassend Polyimidharz, ist.

14. Polyimid-Produkt nach Anspruch 13, wobei das Polyimidprodukt eine Membran ist, welche aus dem porösen Material hergestellt ist.

15. Polyimidprodukt nach einem der Ansprüche 11 bis 14, wobei das zweite Harz eine hydrophile Gruppe aufweist.

16. Polyimidprodukt nach Anspruch 15, wobei das zweite Harz eine Gruppe umfasst, welche eine Sulfonsäuregruppe als die hydrophile Gruppe enthält.

## Revendications

1. Procédé de traitement de surface pour fabriquer une cible de traitement comprenant du polyimide sur une surface hydrophile ou hydrophobe de celle-ci, le procédé comprenant :
la liaison covalente d'une première résine à la surface comprenant du polyimide de la cible de traitement ; et
la liaison covalente d'une seconde résine à la première résine ;
dans lequel la première résine a un groupe amino primaire et/ou un groupe hydroxyle, et un groupe amino secondaire, et
la seconde résine a un groupe (méth)acryloyle et/ou un groupe carbamoyle, et un groupe hydrophile et/ou un groupe hydrophobe.

2. Procédé de traitement de surface selon la revendication 1, dans lequel la première résine est une polyéthylèneimine.

3. Procédé de traitement de surface selon la revendication 1 ou 2, dans lequel la cible de traitement est un matériau poreux comprenant une résine polyimide.

4. Procédé de traitement de surface selon la revendication 3, dans lequel la cible de traitement est une membrane constituée du matériau poreux.

5. Procédé de traitement de surface selon l'une quelconque des revendications 1 à 4, dans lequel la seconde résine a le groupe hydrophile.

6. Procédé de traitement de surface selon la revendication 5, dans lequel la seconde résine comprend un groupe contenant un groupe acide sulfonique comme groupe hydrophile.

7. Utilisation de la première résine et de la seconde résine pour le traitement de surface dans le procédé de traitement de surface selon la revendication 1, **caractérisée en ce que** la première résine est utilisée comme premier liquide comportant la première résine dissoute dans un solvant, et
la seconde résine est utilisée comme second liquide comportant la seconde résine dissoute dans un solvant.

8. Utilisation selon la revendication 7, dans laquelle la première résine est une polyéthylèneimine.

9. Utilisation selon la revendication 7 ou 8, dans laquelle la seconde résine a le groupe hydrophile.

10. Utilisation selon la revendication 9, dans laquelle la seconde résine comprend un groupe contenant un groupe acide sulfonique comme groupe hydrophile.

11. Produit de polyimide comprenant une couche dérivée d'une première résine et une couche dérivée d'une seconde résine sur une surface du produit de polyimide, séquentiellement, dans cet ordre,
dans lequel la surface du produit de polyimide et la couche dérivée de la première résine sont liées par liaison covalente l'une à l'autre ;
la couche dérivée de la première résine et la couche dérivée de la seconde résine sont liées par liaison covalente l'une à l'autre ;
la première résine a un groupe amino primaire et/ou un groupe hydroxyle, et un groupe amino secondaire ; et
la seconde résine a un groupe (méth)acryloyle et/ou un groupe carbamoyle, et un groupe hydrophile et/ou un groupe hydrophobe.

12. Produit de polyimide selon la revendication 11, dans lequel la première résine est une polyéthylèneimine.

13. Produit de polyimide selon la revendication 11 ou 12, dans lequel le produit de polyimide est un matériau poreux comprenant une résine polyimide.

14. Produit de polyimide selon la revendication 13, dans lequel le produit de polyimide est une membrane constituée du matériau poreux.

15. Produit de polyimide selon l'une quelconque des revendications 11 à 14, dans lequel la seconde résine a un groupe hydrophile.

16. Produit de polyimide selon la revendication 15, dans lequel la seconde résine comprend un groupe contenant un groupe acide sulfonique comme groupe hydrophile.
